# EUROPEAN PATENT APPLICATION

(11) **EP 2 234 425 A2**
(43) Date of publication of application: **29.09.2010**
(21) Application number: 10156557.0
(22) Date of filing: 15.03.2010
(51) Int. Cl.: H04W 12/06, H04L 12/28

(54) **Data transfer system and data transfer method**

(30) Priority: 23.03.2009 JP 2009070389
(71) Applicant: Konica Minolta Business Technologies, Inc., Tokyo 100-0005 (JP)
(72) Inventor: Hotta, Ikuya, Tokyo 100-0005 (JP)
(74) Representative: Henkel, Feiler & Hänzel

(57) **Abstract**

In a data transfer system provided with a mobile terminal device, an information processing apparatus, and an authentication server, the mobile terminal device transmits authentication information to the authentication server through a first communication line, the authentication server transmits a predetermined permission code to the mobile terminal device through the first communication line in a case that the authentication succeeds based on the authentication information received from the mobile terminal device, the information processing apparatus permits data transfer between the information processing apparatus and the mobile terminal device in a case that the information processing apparatus receives an input of the permission code received by the mobile terminal from the authentication server, and the information processing apparatus and the mobile terminal device conduct the permitted data transfer through a second communication line.

## Description

### DATA TRANSFER SYSTEM AND DATA TRANSFER METHOD

This application is based on Japanese Patent Application No. 2009-070389 filed on March 23, 2009, in Japanese Patent Office, the entire content of which is hereby incorporated by reference.

### BACKGROUND OF THE INVENTION

The present invention relates to the data transfer system and data transfer method which conduct data transfer between a mobile terminal device and an information processing apparatus, and especially relates to the data transfer system and data transfer method which require authentication for the data transfer

When print data and image data are saved in information processing apparatus, such as a composite machine, a server, and the like which have a copy function and a printer function, there is a case that, for example, a user wants to use the print data and image data with a printing apparatus and an information processing apparatus located at a remote place in a business trip destination.

In such a case, there is a technique to obtain such data saved in a composite machine or a server from a printing apparatus at a remote place in a business trip destination through a network and to print the data by the printing apparatus. For example, there is a printing system in which a printing apparatus acts as a major member to establish secure communication among service servers and acquires printing contents (data) by the use of the communication channel (refer to Japanese Unexamined Patent Publication No. 2004-168052).

Moreover, there is a print system in which the system is constituted to communicates through a first communication channel (for example, infrared ray communication) between a mobile terminal device and a printing apparatus and to communicate through a second communication channel (for example, network) between a printing apparatus and a server, and the transmission of a encrypted message between the server and the mobile terminal device is conducted along a passage (passage in which a printing apparatus is used as a relay terminal) in which the first communication channel, the printing apparatus, and the second communication channel are arranged serially (refer to Japanese Unexamined Patent Publication No. 2003-202978).

Moreover, in order to prevent leakage during the transmission of print data between printing apparatuses connected through a communication line, a password and print data are separately encrypted by a computer and are transmitted separately through the same communication line from the computer to the printing apparatus (for example, refer to Japanese Unexamined Patent Publication No. 2005-74772).

In the case that a printing apparatus or an information processing apparatus at a remote place in a business trip destination is not in an environment in which the printing apparatus or the information processing apparatus can access a server via a network, generally, print data or image data saved in a server and a composite machine are transferred and memorized in an USB (Universal Serial Bus) memory or in a memory in a mobile terminal device, and then the print data or the image data are conveyed together with the USB memory or the mobile terminal device and are uploaded from the USB memory or the mobile terminal device in the printing apparatus or the information processing apparatus at a remote place in a business trip destination.

However, data stored in the USB memory and the mobile terminal device are merely protected only by a password during the shifting. Therefore, if the USB memory and the mobile terminal device are lost, the security level for the data becomes insufficient.

On the other hand, some of mobile terminal devices, such as mobile phones are adapted to be able to utilize two kinds of communication lines different in properties, such as wireless public telephone lines and infrared ray communication. If utilizing these communication lines, a sever is accessed from a mobile terminal device through a wireless public telephone line at a movement destination and data are downloaded from the server to the mobile terminal device. Then, if the data are uploaded immediately from the mobile terminal device to a printing apparatus or an information processing apparatus by the use of an infrared ray communication, information leakage due loss during moving can be avoided. However, if a large amount of data files are downloaded through a wireless public telephone line, the problem that communication time and communication cost increase takes place.

### SUMMARY OF THE INVENTION

The present invention tends to solve the above-mentioned problem, and an object is to provide a data transfer system and a data transfer method which can conduct data transfer between an information processing apparatus and a mobile terminal device efficiently with high security by the utilization of two kinds of communication lines held by a mobile terminal device.

The above object of the present invention can be attained by the following data transfer system to which one aspect of the present invention is reflected.

A data transfer system, comprises:
a mobile terminal device,
an information processing apparatus, and
an authentication server,
wherein the mobile terminal device transmits authentication information to the authentication server through a first communication line, the authentication server transmits a predetermined permission code to the mobile terminal device through the first communication line in a case that the authentication succeeds based on the authentication information received from the mobile terminal device,
the information processing apparatus permits data transfer between the information processing apparatus and the mobile terminal device in a case that the information processing apparatus receives an input of the permission code received by the mobile terminal from the authentication server, and
the information processing apparatus and the mobile terminal device conduct the permitted data transfer through a second communication line.

### BRIEF DESCRIPTION OF THE DRAWINGS

Fig. 1 is an explanatory drawing showing a structure example of a data transfer system and a data transfer sequence according to an embodiment of the present invention.
Fig. 2 is a block diagram showing an outline structure of a composite machine as an information processing apparatus included in the data transfer system according to the embodiment of the present invention.
Fig. 3 is a block diagram showing an outline structure of a mobile terminal device included in the data transfer system according to the embodiment of the present invention.
Fig. 4 is a sequence diagram showing a flow of operations at the time of carrying out a download transfer to transfer a file saved in a first composite machine to a mobile terminal device in the data transfer system according to the embodiment of the present invention.
Fig. 5 is a sequence diagram showing a flow of operations at the time of carrying out an upload transfer to transfer a code file memorized in a mobile terminal device to a second composite machine in the data transfer system according to the embodiment of the present invention.

### DETAILED DESCRIPTION OF THE PREFERRED EMBODIMENT

Hereafter, preferred embodiments of the present invention will be explained. However, the present invention is not limited specifically to these embodiments.

Now, an embodiment of the present invention will be explained based on drawings.

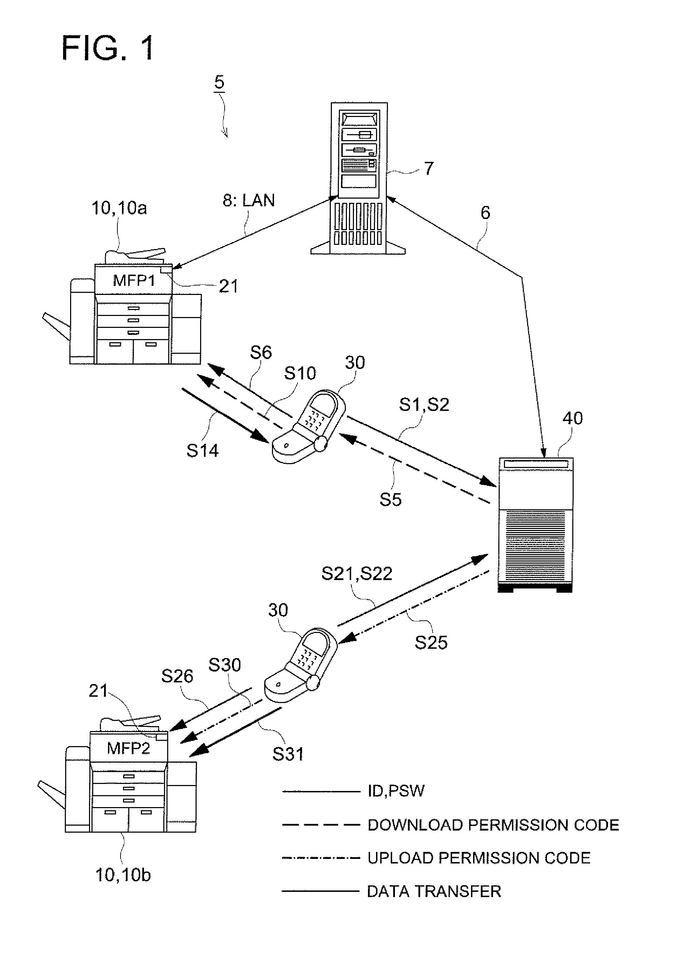

Fig. 1 shows a structure example of a data transfer system 5 according to the embodiment of the present invention. Here, the data transfer system 5 is made as a printing system which transfers print data or image data as a transfer subject, and is structured with a composite machine 10 as an information processing apparatus recited in claims, a mobile terminal device 30, and an authentication server 40.

The composite machine 10 is an apparatus equipped with functions to conduct a copy job to read a document image optically and to print its duplicate image on a recording paper, a scan job to make a file of image data of read document and to store the file or to transmit the file to an external terminal, a print job to form an image relating to print data received from an external terminal on a recording paper and to outputs the image, and the like. In this example, a first composite machine (also, referred to as MFP1 or Multi Function Peripheral) 10a and the 2nd composite machine (also, referred to as MFP2) 10b are provided as the composite machine 10.

The first composite machine 10a is connected to the authentication server 40 through a network. Here, the first composite machine 10a is connected through a LAN (Local Area Network) 8 to an authentication server 7 provided in the LAN, and the authentication server 7 is connected to the authentication server 40 through an external networks 6, such as Internet. The second composite machine 10b is placed in a local environment which is not connected to a network.

The mobile terminal device 30 is made to be able to conduct communication by a second communication line and communication by a first communication line, and the mobile terminal device 30 conducts communication with the composite machines 10 through the second communication line and conducts communication with the authentication servers 40 through the first communication line. Here, the second communication line is a communication line by an infrared ray communication or BlueTooth (registered trademark), and the like. The first communication line is a wireless public telephone line or a wireless public data line.

The second communication line is a communication line for a short distance. Further, the communication speed of the second communication line is a high-speed communication line as compared with the communication speed of the first communication line. That is, the second communication line is made a high speed communication line, and the first communication line is made a low speed communication line. The second communication line serves with a communication speed of, for example, 2.1 Mbit/S in the case of the BlueTooth and 4 Mbit/s in the case of the infrared ray communication. The first communication line serves with a communication speed of about 300 Kbit/S in the case of the wireless public telephone line.

It is desirable that the second communication line is a free communication line. If the second communication line conducts a wireless LAN communication, a so-called ad hoc connection, directly among devices without utilizing an access point, such a second communication line may be permissible.

In the data transfer system 5, In order to transfer data saved in the first composite machine 10a to the second composite machine 10b placed in a local environment so as to conduct printing, firstly, a data transfer (download transfer) is conducted so as to download the data saved in the first composite machine 10a to the mobile terminal device 30, then the mobile terminal device 30 is shifted to an installation site of the second composite machine 10b, thereafter, a data transfer (upload transfer) is conducted so as to upload the data from the mobile terminal device 30 to the second composite machine lOb.

At the time of conducting the download transfer and the upload transfer, the mobile terminal device 30 is adapted to transmit authentication information through the first communication line to the authentication server 40 so as to receive authentication, respectively.

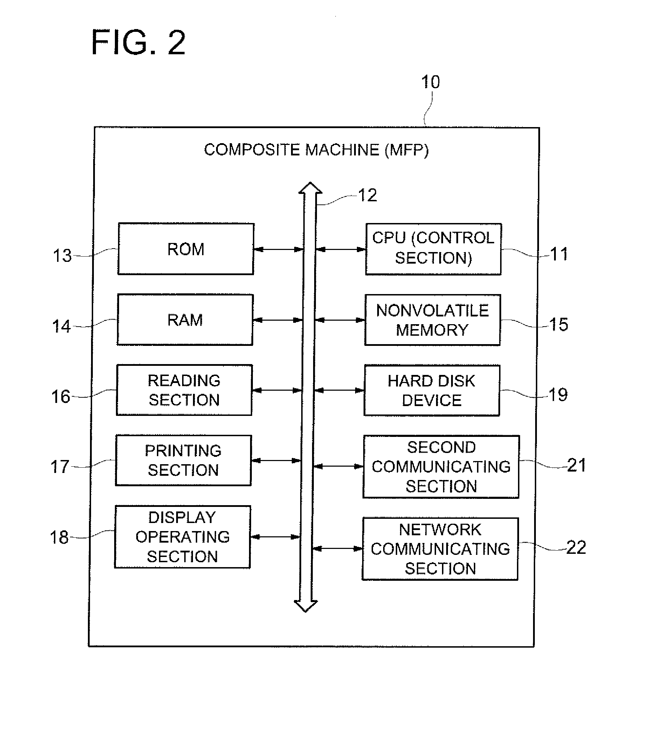

Fig. 2 is a block diagram showing an outline structure of the composite machine 10. The composite machine 10 is structured such that a ROM (Read Only Memory)13, a RAM (Random Access Memory)14, a nonvolatile memory 15, a reading section 16, a printing section 17, a display operating section 18, a hard disk drive (HDD) 19, a second communicating section 21 for performing communication by the second communication line, and a network communicating section 22 for performing communication through a networks, such as the LAN 8 are connected through a bus 12 to a CPU (Central Processing Unit) 11 as a control section which conducts overall control for operations of the composite machine 10.

Various kinds of programs are stored in the ROM 13, and the CPU 11 performs processing in accordance with these programs so that each function as the composite machine 10 is executed. The RAM 14 is a random access memory used as a work memory to store various kinds of data temporarily when the CPU 11 executes a program, an image memory to store image data, and a communication buffer to save temporarily data relating to transmission and reception.

The nonvolatile memory 15 is a rewritable memory by which memory contents are maintained even if a power source is disconnected, and is used to memorize user information, various kinds of setting values, and the like.

The reading section 16 achieves a function to read documents optically and to acquire image data. The reading station 16 is constituted with, for example, a light source to irradiate a document with light, a line image sensor to read the document by one line in the width direction by receiving light reflected from the document, a shifting device to shift a reading position of a line unit in the length direction of the document one line by one line, an optical path composed of a lens and mirrors in order to lead the reflected light from the document to the line image sensor and to form an image of the document, a converting section to convert analog picture signals outputted from the line image sensor into digital image data, and the like.

The printing section 17 achieves a function to print an image corresponding to image data on a recording paper.
Here, the printing section 17 is constituted with a conveying device of a recording paper, a photoreceptor drum, a electric charging device, a laser unit, a developing device, a transferring and separating device, a cleaning device, and a fixing device, and is structured as a so-called laser beam printer that conducts an image formation by an electrophotographic process. However, the printing section 17 may be a printer by a different process.

The display operating section 18 achieves a function to display various kinds of operation screens, setting screens and the like and a function to receive various kinds of operations from a user. The display operating section 18 is constituted with, for example, a display section constituted with a liquid crystal displays and an operating section such as a touch panel provided on the screen so as to detect a coordinate position pushed on the screen, a ten key, a character input key, a start key, and the like.

The hard disk device 19 is a memory device with a large capacity and a non volatile memory, in which image data, print data, etc. are saved. Further, boxes to store image data and print data separately for each user are prepared in the hard disk device 19.

The second communicating section 21 is constituted with communication lines to conduct communication through the second communication line, antennas (a light emitting part and a light receiving section in an infrared communication), and the like. For example, as shown in Fig. 1, the antenna and the light receiving section of the second communicating section 21 are provided on a front panel, an operation panel, etc. of the composite machine 10.

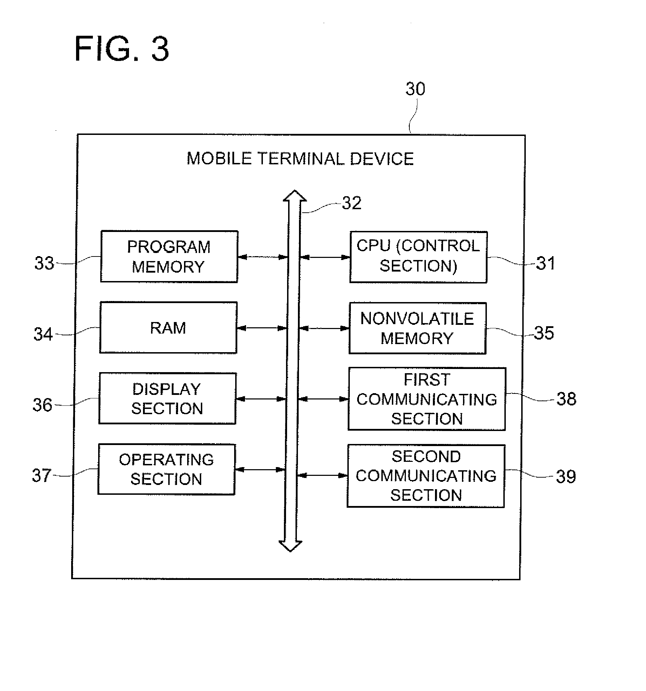

Fig. 3 is a block diagram showing an outline structure of the mobile terminal device 30. The mobile terminal device 30 is structured such that a program memory 33, a RAM 34, a nonvolatile memory 35, a display section 36, an operating section 37, a first line communicating section 38, and a second line communicating section 39 are connected to CPU31 through a bus 32.

In the program memory 33, various kinds of programs which are executed by the CPU 31 and various kinds of fixed data are memorized. The RAM 34 is used as work memory to store various kinds of data temporarily when the CPU 31 executes programs and a communication buffer to save temporarily data relating to transmission and reception.

In the nonvolatile memory 35, data downloaded from the first composite machine 10a, data received from the authentication server 40 and the like are memorized. Further, user information, such as a user ID, various kinds of setup information, and the like are memorized. Furthermore, in the nonvolatile memory 35, application programs loaded from the outside and the like are memorized.

The display section 36 is constituted with a liquid crystal display and the like, and various screens, such as an operation screen and a setting screen, are displayed on the display section 36. The operating section 37 is constituted with arrow keys and the like in addition to numerical keys and function keys, and is adapted to receive various kinds of operations from a user.

The first line communicating section 38 provides a function to conduct communication through the first communication line. Here, first line communicating section 38 is constituted with communication lines to communicate through a wireless public telephone line, antennas, and the like. The second line communicating section 39 provides a function to conduct communication through the second communication line, and is constituted with a communication line, an antenna (a light emitting section and a light receiving section in an infrared communication), and the like.

The authentication server 40 is constituted with a general-purpose computer apparatus equipped with a network communicating function and the like. The authentication server 40 is connected to an external network 6. The authentication server 40 memorizes information (information for user authentication, such as user IDs and passwords) required for user authentication in a memory section. As a user ID, identification information with which a user can be specified uniquely, such as a staff number, a telephone number of the mobile terminal device 30, a mail address, and the like may be used. A password can be set up arbitrarily by a user, and the set-up password is made to correspond with a user ID and prepared beforehand such that the set-up password is registered as information for user authentication in the authentication server 40 or the authentication server 7 in the LAN.

The authentication server 40 may be structured such that information for user authentications (user IDs, passwords, etc.) are saved in the authentication server 7 in the LAN and the authentication server 40 obtains the information for user authentication from the authentication server 7 in the LAN through the external network 6. For example, for the authentication in the LAN, AD (Active Directory), LDAP (Lightweight Directory Access Protocol), and the like may be used.

With regard to the second composite machine 10b located in a local environment, information for user authentication is beforehand memorized in the nonvolatile memory 15 or the hard disk device 19. For example, the second composite machine 10b takes in the information for user authentication from a removable storage medium and memorizes it.

The wireless public telephone line is connected with the external network 6 by a facility provided by the telephone company so that communication between the mobile terminal device 30 and the authentication server 40 is performed through the wireless public telephone line being the first communication line, the facility of the telephone company and the external network 6.

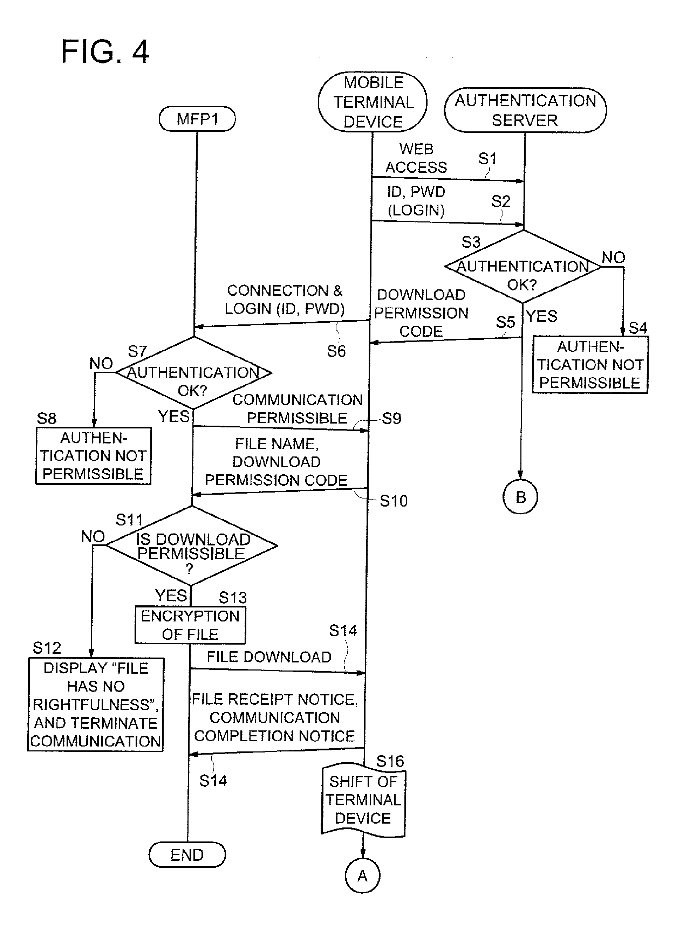

Next, an explanation will be made about a workflow in the case that the data saved in the first composite machine 10a are transferred to and printed by the second composite machine 10b located in a local environment in the data transfer system 5. Fig. 4 shows a sequence at the time that a file saved in the first composite machine 10a are downloaded and transferred to the mobile terminal device 30.

First, a user operates the mobile terminal device 30, accesses the authentication server 40 through a wireless public telephone line (the first communication line) from the mobile terminal device 30 (S1), and transmits a user ID and a password as authentication information to the authentication server 40 (S2). The mobile terminal device 30 transmits the user ID and the password entered by the operating section 37 to the authentication server 40.

The authentication server 40 compares the received user ID and password with the information for user authentication memorized beforehand remembered (or, acquired from the authentication server 7 in the LAN), thereby performing user authentication (S3). When an authentication cannot be obtained (S3; No), the message that the user authentication is not permitted is transmitted to the mobile terminal device 30 (S4).

In the case that an authentication is succeeded (S3; Yes), a download permission code which is an identification code of a purport which permits the download transfer of a file is transmitted as a reply to the mobile terminal device 30 (S5). The download permission code is code information used later as a encryption key. The download permission code may be a different value (only one in each code) for every issuance. For example, the download permission code may be preferably include date, hour, minute, and second at the time of issuance.

The mobile terminal device 30 having received the download permission code accesses the first composite machine 10a through the second communication line, such as an infrared communication, and transmits a user ID and a password as the information for user authentication to the first composite machine 10a (S6). The first composite machine 10a having received these information performs user authentication based on the received user ID and password. Here, the first composite machine 10a is adapted to transmit the received user ID and password to the authentication server 7 in the LAN, to request the authentication server 7 to conduct user authentication processing, and to receive an authentication result from the authentication server 7 in the LAN.

When the user authentication is not succeeded (S7; No), the message that the user authentication is not permitted is transmitted to the mobile terminal device 30, or is displayed on the display operating section 18 of the first composite machine 10a (S8).

When the user authentication is succeeded (S7; Yes), the first composite machine 10a transmits a reply indicating a communication permission to the mobile terminal device 30 (S9). The mobile terminal device 30 having received the reply of the communication permission transmits a file name of a file (may be specific information of a file) desired to be downloaded and transferred and the download permission code received from the authentication, server 40 to the first composite machine 10a through the second communication line (S10).

The first composite machine lea judges about the rightfulness of the received file name and download permission code. For example, if the file name is the file name of a file save in the first composite machine 10a, the file name is judged as the rightfulness, or if the file name is in agreement with the file in the save box correlated with the user ID of the user which has been authenticated in S7, the file name is judged as the rightfulness. Further, with regard to the download permission code, for example, the rightfulness is judged based on the number of characters, the number of digits, or a code arrangement (for example, a code of 13 digits starting with ABC or not), and the like.

When the first composite machine 10a judges that any one of the file name and the download permission code is not rightful (S11; No), the fact that there is no rightfulness in terms of a file name and the like is displayed on the display operating section 18, and the first composite machine 10a terminates the communication with the mobile terminal device 30 (S12).

When the first composite machine 10a judges that the file name and the download permission code are rightful (S11; Yes), the first composite machine 10a encrypts the file of the file name by using the download permission code as an encryption key (S13).

Next, the first composite machine low downloads the file after the encryption (it is called an encrypted file) and transfers it to the mobile terminal device 30 (S14). The mobile terminal device 30 memorizes the downloaded and transferred encrypted file in the nonvolatile memory 35.

If the download transfer of the encrypted file has been completed normally, the mobile terminal device 30 transmits a file receipt notice and a communication completion notice to the first composite machine 10a (S15), and then the communication between the first composite machine 10a and the mobile terminal device 30 is terminated. Thereafter, a user moves together with the mobile terminal device 30 to the installation location of the second composite machine 10b (for example, a business trip destination) (S16).

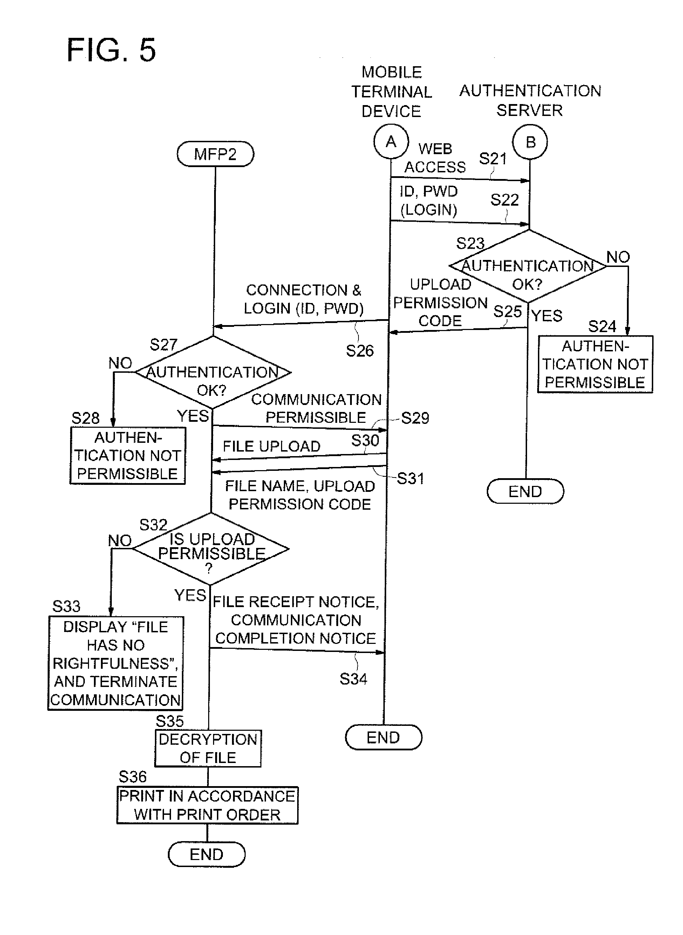

Fig. 5 shows a sequence at the time of carrying out an upload transfer of the encrypted file memorized in the mobile terminal device 30 to the second composite machine 10b. After the user moves near the second composite machine 10b, the user operates the mobile terminal device 30, accesses the authentication server 40 through a wireless public telephone line (the first communication line) from the mobile terminal device 30 (S21), and transmits again the user ID and the password to the authentication server 40 (S22). At this time, the user requests permission of an upload transfer for the authentication, server 40.

The authentication, server 40 compares the received user ID and password with the information for user authentication memorized beforehand remembered (or, acquired from the authentication, server 7 in the LAN), thereby performing user authentication (S23). When an authentication cannot be obtained (S23; No), the message that the user authentication is not permitted is transmitted to the mobile terminal device 30 (S24) .

In the case that an authentication is succeeded (S23; Yes), an unload permission code which is an identification code of a purport which permits the upload transfer of a file is transmitted as a reply to the mobile terminal device 30 (S25). The upload permission code is code information used later as a decryption key. The upload permission code may be different from the corresponding download permission code.

For example, the authentication server 40 determines an upload permission code as follows. At the time of issuance of the download permission code, the authentication server 40 generates a decryption key request code to the download permission code (Fig. 4, S15), correlates this download permission code with the decryption key request code, and memorizes this correlation. Further, the decryption key request code is transmitted to the mobile terminal device 30 with the download permission code. The mobile terminal device 30 memorizes these codes, and when the user requires permission of an upload transfer for the authentication server 40, the user transmits the decryption key request code to the authentication server 40. The authentication server 40 specifies the download permission code memorized with the correlation with the received decryption key request code, generates a decryption key for decrypting the file encrypted by this download permission code, and determines this as an upload permission code.

The mobile terminal device 30 having received the upload permission code accesses the second composite machine 10b through the second communication line, such as an infrared communication, and transmits the user ID and the password as the information for user authentication to the second composite machine 10b (S26). The second composite machine 10b having received these information performs user authentication based on the received user ID and password. Here, the second composite machine 10b independently performs user authentication by comparing the received user ID and password with the information for user authentication memorized in the nonvolatile memory 15 of itself.

When the user authentication is not succeeded (S27; No), the message that the user authentication is not permitted is transmitted to the mobile terminal device 30, or is displayed on the display operating section 18 of the second composite machine 10b (S28),

When the user authentication is succeeded (S7; Yes), the second composite machine 10b transmits a reply indicating a communication permission to the mobile terminal device 30 (S2s). The mobile terminal device 30 having received the reply of the communication permission transmits a file (the downloaded and transferred encrypted file memorized at S14 in Fig. 4) which is desired to be uploaded and transferred, to the second composite machine 10a through the second communication line (S30). Further, the file name of the file and the upload permission code previously received from the authentication server 40 are transmitted to the second composite machine 10b through the second communication line (S31).

The second composite machine 10b judges about the rightfulness of the received file name and upload permission code. For example, the rightfulness of the upload permission code is judged based on the number of characters, the number of digits, or a code arrangement. With regard to the file name, for example, when the file is encrypted in the first composite machine 10a, the encrypted file name is included in the header section of the encrypted file. Then, this encrypted file name is compared with the file name specified by the user at the time of the upload transfer, whereby the rightfulness of file name can be judged.

When the second composite machine 10b judges that any one of the file name and the upload permission code is not rightful (S32; No), the fact that there is no rightfulness in terms of the file name and the like is displayed on the display operating section 18, and the second composite machine 10b terminates the communication with the mobile terminal device 30 (S33).

When the second composite machine 10b judges that the file name and the upload permission code are rightful (S32; Yes), the second composite machine 10a transmits a file receipt notice and a communication completion notice to the mobile terminal device 30 (S34), and terminates the communication with mobile terminal device 30.

Then, the second composite machine 10b decrypts the encrypted file received at S30 by using the upload permission code received at S31 as a decryption key (S35), prints the decrypted file, and ends the processing (S36). For example, the second composite machine 10b saves the decrypted file in a specific box (a box of the user which carried out the upload transfer, or a box for visitors). Thereafter, when the second composite machine 10b receives a printing request for the file saved in the box from the display operating section 18 or the mobile terminal device 30, the second composite machine 10b conducts printing based on the file.

As in the above ways, the communication for authentication between the authentication server 40 and the mobile terminal device 30 is performed by the wireless public telephone line (the first communication line), and data transfer (an upload transfer and download transfer) between the composite machine 10 and the mobile terminal device 30 is performed by the use of the second communication line, such as infrared ray communication which is cheap with high speed as compared with the first communication line. Therefore, the data transfer between the composite machine 10 and the mobile terminal device 30 can conducted efficiently while securing the security based on the authentication by the use of the authentication, server 40.

Namely, even when data transfer is conducted between an apparatus located in a local environment like the second composite machine 10b and the mobile terminal device 30, since the authentication concerning the data transfer can be conducted by the authentication server 40 through a wireless public telephone line (the first communication line), a severe authentication judgment can be performed by the use of the authentication, server 40, thereby improving security. Further, since the second communication line which is cheap with high speed as compared with the first communication line is used for the data transfer between the composite machine 10 and the mobile terminal device 30, even if a file has a large volume such as image data and the like, the large file can be transmitted efficiently in a short time as compared with the first communication line.

Furthermore, the data are encrypted while being memorized in the mobile terminal device 30, and an unload permission code (decryption key) issued by the authentication success in the authentication server 40 is needed to decrypt the encrypted data. Therefore, even on the way that the data is shifted together with the mobile terminal device 30, high security is secured for the data. Moreover, the shift of the data from the first composite machine 10a to the second composite machine 10b can be conducted easily and securely.

As mentioned above, although the embodiments of the present invention have been explained with reference to drawings, concrete structures are not restricted to the structures of the embodiments. Even if there are modifications and additions made in a range which does not deviate from the gist of the present invention, such modifications ad additions are included in the present invention.

For example, in the embodiments, in both of the download transfer from the first composite machine 10a and the upload transfer to the second composite machine 10b, authentication in the authentication server 40 is conducted by the use of the first communication line and the data transfer is conducted by the use of the second communication line. However, such a technique to use separately the second communication line and the first communication line in the above way may be conducted for only one of the download transfer and the upload transfer. For example, only in the case that the composite machine 10 is located in a local environment, authentication is conducted by the use of the first communication line, and in the case that the composite machine 10 is in a network environment, the communication relating to the authentication may be conducted by the use of the second communication line. That is, it may be structured that the communication relating to the authentication between the mobile terminal device 30 and the composite machine 10 is conducted by the use of the second communication line, and the authentication is requested to the authentication server 40 through a network in which the composite machine 10 serves as a relaying terminal.

In the above embodiment, an authentication is conducted with a user ID and a password in the second composite machine 10b located in a local environment. However, such an authentication may be omitted. That is, in an apparatus located in a local environment, it may be structured that if an upload permission code received from the mobile terminal device 30 is rightful, the authentication is deemed as being completed and an upload transfer of a file is permitted.

Moreover, in the above embodiment, a download permission code is used as an encryption key and an upload permission code is used as a decryption key. However, it is not essential to use the download permission code as the encryption key and the upload permission code as the decryption key. For example, the download permission code and the upload permission code are merely used as a permission code to confirm the right of a download transfer and an upload transfer, and the encryption key and the decryption key may be provided as different information separately from the download permission code and the upload permission code.

Moreover, a file subjected to a download transfer or an upload transfer may not be limited to an encrypted file and may be a plaintext file, or a not encrypted file.

In the above embodiment, a permission code (a download permission code, upload permission code) which the mobile terminal device 30 acquires from the authentication server 40 is inputted into to the composite machine 10 through the second communication line. However, it may be inputted manually by a user or through another communication line.

In the above embodiment, an explanation has been made about the example that the composite machine 10 equipped with the printing function is used as an apparatus to conduct data transfer between it and the mobile terminal devices 30. However, the apparatus may be an information processing apparatus equipped with a data transfer function by the use of the second communication line, and may be the other kind apparatus. For example, it may be a printer apparatus, a display apparatus to display a file and the like. Moreover, the data transfer may not be limited to an object to print the data, and may be used for display or various kinds of data processing.

Based on the above embodiments, preferable structures to attain the object of the present invention will be explained hereafter.
[1] A data transfer system is characterized by comprising a mobile terminal device, an information processing apparatus, and an authentication server, wherein the mobile terminal device transmits authentication information to the authentication server through the first communication line, the authentication server transmits a predetermined permission code to the mobile terminal device through the first communication line in the case that the authentication succeeds based on the authentication information received from the mobile terminal device, the information processing apparatus permits the mobile terminal device to conduct data transfer on the condition of the input of the permission code acquired by the mobile terminal from the authentication server, and the information processing apparatus and the mobile terminal device conduct the permitted data transfer through the second communication line.
   In the above data transfer system, in order to conduct data transfer between the information processing and the mobile terminal device, authentication by the authentication server is needed, and the authentication is conducted by the communication of the mobile terminal device with the authentication server through the first communication line. The information processing apparatus permits the data transfer between the information processing apparatus and the mobile terminal device in response to the input of the permission code acquired by the mobile terminal device from the authentication server. If the data transfer is permitted, the information processing apparatus and the mobile terminal device conduct data transfer therebetween through the second communication line. In this way, when two kinds of communication lines are used separately for authentication and for data transfer, the data transfer between the information processing apparatus and the mobile terminal device can be conducted efficiently while securing the security of the authentication by the use of the authentication server.
[2] The data transfer system described in [1] is **characterized in that** the first communication line has a low speed as compared with the second communication line.
   In the above data transfer system, since generally the amount of data for authentication is little as compared with data transfer, such as an image file, a low speed line is used for the first communication line used for authentication as compared with the second communication line used for data transfer.
[3] The data transfer system described in [1] or [2] is **characterized in that** the first communication line is a wireless public telephone line, and the second communication line is a communication line for a short distance communication.
   In the above data transfer system, a wireless public telephone line is used for the first communication line and the communication line for short distance communications is used for the second communication line. The communication line for a short distance communication is an infrared ray communication and the like, for example. Generally, the communication line for short distance communications is a high speed than a wireless public telephone line (a wireless public telephone line is a low speed line and a communication line for short distance communications is a high speed line), and the communication cost of the communication line for short distance communications becomes cheap as compared with the wireless public telephone line.
[4] The data transfer system described in any one [1] to [3] is **characterized in that** the data transmitted by the data transfer are the encrypted data.
   In the above data transfer system, the encrypted data are transferred between the information processing apparatus and the mobile terminal device. The encryption and the decryption may be performed by the information processing apparatus or may be performed by other apparatus.
[5] The data transfer system described in any one [1] to [4] is **characterized in that** the data transfer is the transmission of the encrypted data from the information processing apparatus to the mobile terminal device, the authentication server transmits an encryption key to the mobile terminal through the first communication line at the time that an authentication succeeds, and the information processing apparatus generates the above-mentioned encrypted data by encrypting with an encryption key upon receipt of an input of the encryption key acquired by the mobile terminal device from the authentication server.
   In the above data transfer system, an encryption key is issued by the authentication server and is transmitted to the mobile terminal device from the authentication server through the first communication line. The information processing apparatus receives the input of the encryption key acquired by the mobile terminal device from the authentication server, and encrypts data being a transfer target by the use of the inputted encryption key. The input of encryption key to the information processing apparatus may be made manually or conducted by communication through the second communication line.
[6] The data transfer system described in any one [1] to [4] is **characterized in that** the data transfer is the transmission of the encrypted data from the mobile terminal device to the information processing apparatus, the authentication server transmits a decryption key to the mobile terminal device through the first communication at the time that an authentication succeeds, the information processing apparatus decrypts the above-mentioned encrypted data received from the mobile terminal device by the decryption key in response to the input of the decryption key acquired by the mobile terminal device from the authentication server.
   In the above data transfer system, a decryption key is issued from the authentication server and is transmitted to the mobile terminal device from the authentication server through the first communication line. The information processing apparatus receives the input of the decryption key acquired by the mobile terminal device from the authentication server and decrypts the encrypted data uploaded from the mobile terminal device by the use of this inputted decryption key. The input of decryption key to the information processing apparatus may be made manually or conducted by communication through the second communication line.
[7] The data transfer system described in any one [1] to [6] is **characterized in that** the system has a first information processing apparatus and a second information processing apparatus as the information processing apparatus, the data transfer between the mobile terminal device and the first information processing apparatus is the transmission of the data from the first information processing apparatus to the mobile terminal device, and the data transfer between the mobile terminal device and the second information processing apparatus is the transmission of the data which the mobile terminal device receives from the first, from the mobile terminal device to the second information processing apparatus.
   In the above data transfer system, the data are transferred from the first information processing apparatus to the second information processing apparatus through the mobile terminal device. That is, the download transfer of the data is carried out from the first information processing apparatus to the mobile terminal device, the mobile terminal device is moved near the second information processing apparatus, and the upload transfer of the data is carried out from this mobile terminal device to the second information processing apparatus.
[8] The data transfer system described in any one [1] to [7] is **characterized in that** the input is conducted by the transfer from the mobile terminal device to the information processing apparatus through the second communication line.
   In the above data transfer system, a permission code acquired by the mobile terminal device from the authentication server is inputted from the mobile terminal device to the information processing apparatus through the second communication line, and also an encryption key and a decryption key acquired by the mobile terminal device from the authentication server is inputted from the mobile terminal device to the information processing apparatus through the second communication line.
[9] The data transfer system described in any one [1] to [8] is **characterized in that** the information processing apparatus acting as a data transfer destination in the above data transfer is a printing apparatus to form an image based on the data received from the mobile terminal device on a recording paper and to output the recording paper.
   In the above data transfer system, the data uploaded from a mobile terminal device are image data, and the information processing apparatus at an upload destination is an apparatus equipped with a printing function.
[10] A data transfer method is **characterized in that** in the case that data are transmitted between a mobile terminal device and an information processing apparatus, the mobile terminal device transmits authentication information to an authentication server through a first communication line, the authentication server transmits a predetermined permission code to the mobile terminal device through the first communication line in the case that the authentication succeeds based on the authentication information received from the mobile terminal device, the information processing apparatus permits the mobile terminal device to conduct data transfer on the condition of the input of the permission code acquired by the mobile terminal from the authentication server, and the information processing apparatus and the mobile terminal device conduct the permitted data transfer through the second communication line.
[11] The data transfer method described in [10] is **characterized in that** the first communication line has a low speed as compared with the second communication line.
[12] The data transfer method described in [10] or [11] is **characterized in that** the first communication line is a wireless public telephone line, and the second communication line is a communication line for a short distance communication.
[13] The data transfer method described in any one [10] to [12] is **characterized in that** the data transmitted by the data transfer are the encrypted data.
[14] The data transfer method described in any one [10] to [13] is **characterized in that** the data transfer is the transmission of the encrypted data from the information processing apparatus to the mobile terminal device, the authentication, server transmits an encryption key to the mobile terminal through the first communication line at the time that an authentication succeeds, and the information processing apparatus generates the above-mentioned encrypted data by encrypting with an encryption key upon receipt of the input of the encryption key acquired by the mobile terminal device from the authentication server.
[15] The data transfer method described in any one [10] to [14] is **characterized in that** the data transfer is the transmission of the encrypted data from the mobile terminal device to the information processing apparatus, the terminal device transmits a decryption key to the mobile terminal device through the first communication at the time that an authentication succeeds, the information processing apparatus decrypts the above-mentioned encrypted data received from the mobile terminal device by the decryption key in response to the input of the decryption key acquired by the mobile terminal device from the authentication server.
[16] The data transfer method described in any one [10] to [15] is **characterized in that** the data transfer between the mobile terminal device and the first information processing apparatus is the transmission of the data from the first information processing apparatus to the mobile terminal device, and the data transfer between the mobile terminal device and the second information processing apparatus is the transmission of the data which the mobile terminal device receives from the first, from the mobile terminal device to the second information processing apparatus.
[17] The data transfer method described in any one [10] to [16] is **characterized in that** the input is conducted by the transfer from the mobile terminal device to the information processing apparatus through the second communication line.
[18] The data transfer method described in any one [10] to [17] is **characterized in that** the information processing apparatus acting as a data transfer destination in the above data transfer is a printing apparatus to form an image based on the data received from the mobile terminal device on a recording paper, and outputs the recording paper.
   According to the data transfer system and data transfer method of the present invention, data transfer between an information processing apparatus and a mobile terminal device can be conducted efficiently with high security by the utilization of two kinds of communication lines held by a mobile terminal device while securing the security of the authentication by the use of the authentication server.

## Claims

1. A data transfer system, comprising:
a mobile terminal device,
an information processing apparatus, and
an authentication server,
wherein the mobile terminal device transmits authentication information to the authentication server through a first communication line, the authentication server transmits a predetermined permission code to the mobile terminal device through the first communication line in a case that the authentication succeeds based on the authentication information received from the mobile terminal device,
the information processing apparatus permits data transfer between the information processing apparatus and the mobile terminal device in a case that the information processing apparatus receives an input of the permission code received by the mobile terminal from the authentication server, and
the information processing apparatus and the mobile terminal device conduct the permitted data transfer through a second communication line.

2. The data transfer system described in claim 1, wherein the fist communication line has a communication speed lower than that of the second communication line.

3. The data transfer system described in claim 1, wherein the first communication line is a wireless public telephone line, and the second communication line is a communication line for a short distance communication.

4. The data transfer system described in claim 1, wherein data transmitted by the data transfer are encrypted-data.

5. The data transfer system described in claim 1, wherein the data transfer is transmission of encrypted data from the information processing apparatus to the mobile terminal device, the authentication server transmits an encryption key to the mobile terminal through the first communication line in a case that an authentication succeeds, and the information processing apparatus receives an input of the encryption key received by the mobile terminal device from the authentication server and creates the encrypted-data by encrypting data with the encryption key.

6. The data transfer system described in claim 1, wherein the data transfer is transmission of encrypted data from the mobile terminal device to the information processing apparatus, the authentication server transmits a decryption key to the mobile terminal device through the first communication in a case that an authentication succeeds, the information processing apparatus receives an input of the decryption key received by the mobile terminal device from the authentication server and decrypts the encrypted data received from the mobile terminal device by the decryption key.

7. The data transfer system described in claim 1, wherein the system has a first information processing apparatus and a second information processing apparatus as the information processing apparatus, in the data transfer between the mobile terminal apparatus and the first information processing apparatus, data are transmitted from the first information processing apparatus to the mobile terminal device, and in the data transfer between the mobile terminal device and the second information processing apparatus, the data which the mobile terminal device has received from the first information processing apparatus are transmitted from the mobile terminal device to the second information processing apparatus.

8. The data transfer system described in claim 1, wherein the input of the permission code is conducted such that the permission code is transmitted from the mobile terminal device to the information processing apparatus through the second communication line.

9. The data transfer system described in claim 1, wherein the information processing apparatus acting as a data transfer destination in the data transfer is a printing apparatus to form an image based on the data received from the mobile terminal device on a recording paper and to output the recording paper.

10. A data transfer method, comprising the steps of:
transmitting authentication information from a mobile terminal device to an authentication server through a first communication line;
transmitting a predetermined permission code from the authentication server transmits to the mobile terminal device through the first communication line in a case that the authentication succeeds based on the authentication information received from the mobile terminal device;
permitting data transfer between the information processing apparatus and the mobile terminal device by the information processing apparatus in a case that the information processing apparatus receives an input of the permission code received by the mobile terminal from the authentication server, and
conducting the permitted data transfer between the information processing apparatus and the mobile terminal device through a second communication line.

11. The data transfer method described in claim 10, wherein the fist communication line has a communication speed lower than that of the second communication line.

12. The data transfer method described in claim 10, wherein the first communication line is a wireless public telephone line, and the second communication line is a communication line for a short distance communication.

13. The data transfer method described in claim 10, wherein data transmitted by the data transfer are encrypted-data.

14. The data transfer method described in claim 10, wherein the data transfer is transmission of encrypted data from the information processing apparatus to the mobile terminal device, the authentication server transmits an encryption key to the mobile terminal through the first communication line in a case that an authentication succeeds, and the information processing apparatus receives an input of the encryption key received by the mobile terminal device from the authentication server and creates the encrypted-data by encrypting data with the encryption key.

15. The data transfer method described in claim 10, wherein the data transfer is transmission of encrypted data from the mobile terminal device to the information processing apparatus, the authentication server transmits a decryption key to the mobile terminal device through the first communication in a case that an authentication succeeds, the information processing apparatus receives an input of the decryption key received by the mobile terminal device from the authentication server and decrypts the encrypted data received from the mobile terminal device by the decryption key.

16. The data transfer method described in claim 10, wherein the system has a first information processing apparatus and a second information processing apparatus as the information processing apparatus, in the data transfer between the mobile terminal apparatus and the first information processing apparatus, data are transmitted from the first information processing apparatus to the mobile terminal device, and in the data transfer between the mobile terminal device and the second information processing apparatus, the data which the mobile terminal device has received from the first information processing apparatus are transmitted from the mobile terminal device to the second information processing apparatus.

17. The data transfer method described in claim 10, wherein the input of the permission code is conducted such that the permission code is transmitted from the mobile terminal device to the information processing apparatus through the second communication line.

18. The data transfer method described in claim 10, wherein the information processing apparatus acting as a data transfer destination in the data transfer is a printing apparatus to form an image based on the data received from the mobile terminal device on a recording paper and to output the recording paper.
